# EUROPEAN PATENT APPLICATION

(11) **EP 0 547 777 A1**
(43) Date of publication of application: **23.06.1993**
(21) Application number: 92310596.9
(22) Date of filing: 20.11.1992
(51) Int. Cl.: G02B 6/38

(54) **Single optical fiber hermaphroditic connector**

(30) Priority: 19.12.1991 US 810617
(71) Applicant: AT&T Corp., New York, NY 10013-2412 (US)
(72) Inventor: Darden, Bruce Vaiden, Lawrenceville, Georgia 30244 (US); Kalomiris, Vasilios Elias, Holmdel, New Jersey 07733 (US)
(74) Representative: Johnston, Kenneth Graham

(57) **Abstract**

A single optical fiber hermaphroditic connector (20) includes a connection end which includes a plug (22) which terminates an end portion of an optical fiber (30). The connection end also includes a hermaphroditic portion (35) which is adapted to mate with a hermaphroditic portion of another identical connector. The hermaphroditic portion includes alternating circumferentially spaced longitudinally projecting ringers (40,40) and recesses disposed about the plug. The fingers project beyond the plug and are adapted to be received in the recesses of the hermaphroditic portion of the mating connector. Each connector also is provided with a coupling nut (70). The coupling nut of one of two mating connectors is used to secure together the connectors after their hermaphroditic portions have been mated.

## Description

### Technical Field

This invention relates to a single optical fiber hermaphroditic connector.

### Background of the Invention

In order to assure that low loss optical fibers which are produced today are not diminished in their effectiveness in systems, the fibers are connected through intermateable connectors which preserve those low losses. For single optical fibers, connections may be made through a connector which is referred to as a biconic connector. See, for example, an article entitled "Interconnection for Lightguide Fibers" which was authorized by T. L. Williford, et al. and which appeared in the Winter 1980 issue of the Western Electric Engineer beginning at page 87.

In the biconic connector system two plugs each having a frusto-conical configuration and each terminating an optical fiber are received in a sleeve having two aligned, frusto-conical cavities such that small diameter portions of the plugs are disposed adjacent to each other at a center plane of the sleeve.

Another single optical fiber connector is AT&T's ST@ connector which includes a cylindrical plug or ferrule having a passageway for receiving an end portion of an optical fiber. Two such connectors are caused to become disposed end to end with longitudinal axes of the two aligned in a sleeve of a coupling. Each ferrule is supported in a connector component and biased outwardly toward the other mating connector.

What is desirable is the use of a hermaphroditic connector in which each optical fiber may be terminated with such a connector and joined to another such connector without the need for any intervening device such as a coupling. One of the advantages of such a system is that it obviates the need to inventory couplings and avoids the possibility for misplacing same in the field. Further, the deployment in the field of cable each end of which is terminated with a hermaphroditic connector avoids the mistake of juxtaposing an end of a cable terminated with a non-hermaphroditic connector with an identical non-mateable terminated end of another cable.

In one prior art hermaphroditic, dual biconic connector, plugs which terminate the optical fibers are disposed adjacent to one end of a housing with a plug associated with one of the fibers being disposed in one end of an alignment sleeve which in an opposite end thereof is adapted to receive a plug which terminates an optical fiber of another such connector to be assembled to this connector. Retaining facilities are disposed at an entrance to the one end of the housing to retain the sleeve in the housing and to guide a sleeve of another connector to cause another plug of this connector to be received in one end of the sleeve of the other connector. See U.S. patent 4,863,235.

The hereinbefore-described hermaphroditic connector is well suited to cables which include two optical fibers and which are to be terminated with biconic connector plugs. However, presently, there is much interest in the use of single optical fiber connectors such as one biconic connector or AT&T's ST@ connector. There are many instances when only single fiber optical cables are used. For the many applications of such a cable, there is a need for a single fiber hermaphroditic connector in which one terminated fiber may be connected directly to another such terminated fiber cable without the need for any intervening coupling device such as a coupling sleeve.

Seemingly, the prior art is devoid of a single optical fiber hermaphroditic ferrule connector. The sought-after single fiber hermaphroditic connector should be one in which the plug or ferrule which terminates the single optical fiber may have different configurations.

### Summary of the Invention

The foregoing problem of the prior art has been solved by a single optical fiber hermaphroditic connector set forth in the claims.

### Brief Description of the Drawing

FIG. 1 is a perspective view of a single optical fiber hermaphroditic connector of this invention oriented for optical connection to another identical single optical fiber hermaphroditic connector;
FIG. 2 is a front elevational view partially in section of a single optical fiber hermaphroditic biconic connector of this invention;
FIG. 3 is an enlarged perspective view of hermaphroditic portions of two connectors of this invention oriented and aligned for mating; and
FIG. 4 is an enlarged perspective view of the hermaphroditic portion of two connectors of this invention after they have been mated.

### Detailed Description

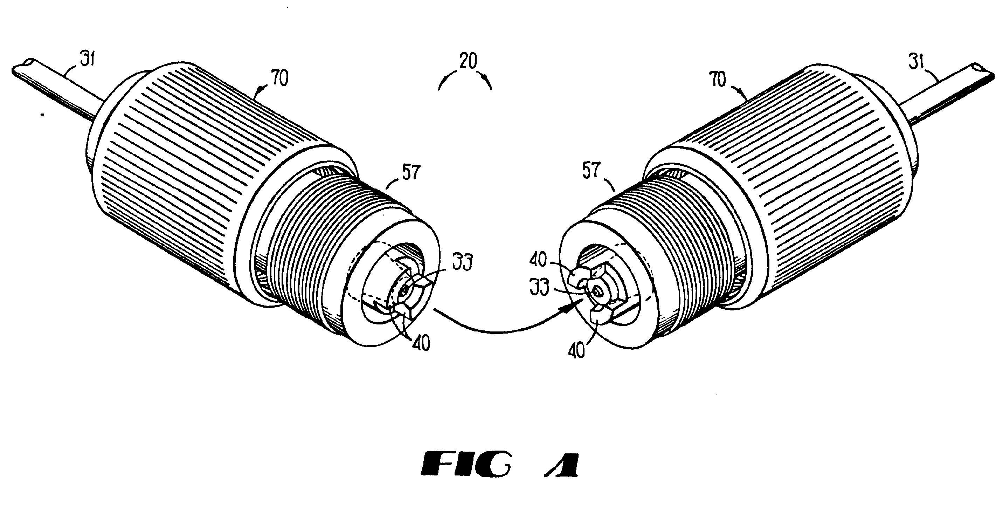

Referring now to FIGS. 1 and 2, there is shown a single optical fiber hermaphroditic connector which is designated generally by the numeral 20. The connector 20 includes a biconic plug 22 which includes a cylindrical body 23, an end portion 24 and a frusto-conical leading end portion 26. A passageway 27 extends through the biconic plug 22 and is adapted to receive an end portion of an optical fiber 30 of an optical fiber cable 31. An end of the optical fiber 30 is terminated in a pedestal 33 protruding from an end face of the frusto-conical portion 26 of the biconic plug 22.

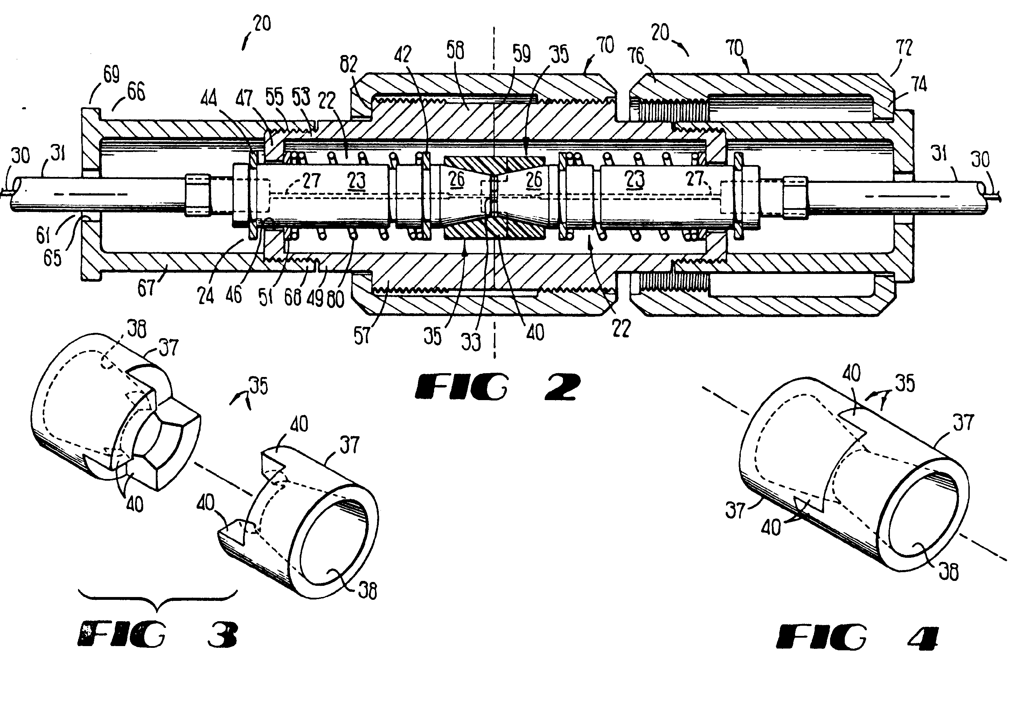

In order to facilitate the connection of the optical fiber 30 which is terminated by the biconic plug 22 with an optical fiber which is terminated by an identical plug without the need for an intermediate sleeve, the connection includes a hermaphroditic portion 35 (see also FIG. 3) which is attached to or molded integrally with the frusto-conical portion 26.

The hermaphroditic portion 35 includes a sleeve- like portion 37 which includes an inwardly tapering cavity 38. The surface of the cavity 38 is conformable to the outer surface of revolution of the frusto-conical portion 26 of the plug 22. Further, as can best be seen in FIGS. 2 and 3, a portion of the hermaphroditic portion which faces toward a mating plug includes circumferentially spaced projecting portions or fingers 40-40. With each connector 20 having a mating portion which includes alternating fingers and recesses between adjacent fingers, it becomes relatively easy to mate two such connectors. As one connector is brought into juxtaposition with another identical connector, one of the connectors is manipulated to turn axially the plug relative to the other until the fingers of one are aligned with recesses of the other. Then relative axial motion is caused to occur between the connectors until the end faces of the pedestals 33-33 of the frusto-conical portions 26-26 abut each other. The cavity 38 is formed so that when the portion 35 is fitted to or molded with the frusto-conical portion 26 and when the hermaphroditic portions of two connectors are mated, the pedestals of the end faces will touch each other. As a result of the foregoing arrangement, no third member such as a sleeve is needed in order to couple together two of the connectors 20-20.

Referring now to FIG. 2, it can be seen that each connector 20 includes two spaced retaining rings 42 and 44 which are disposed about the cylindrical portion of the plug 22. The retaining ring 42 is disposed adjacent to the intersection of the cylindrical portion and the frusto-conical portion of the plug whereas the other retaining ring 44 is disposed about the trailing end of the cylindrical portion.

Further, the cylindrical portion of the plug extends through an opening 46 provided by an annular, inwardly projecting collar47 of a housing 49. The retaining ring 44 is disposed on the outer side of the collar. A washer 51 is disposed about the cylindrical portion of the plug 22 on an opposite side of the collar 47. As a result, the retaining ring 44 and the washer 51 cooperate to hold the biconic plug 22 within the housing 49.

Further as can be seen in FIG. 2, the housing 49 includes a small diameter portion 53 having an externally threaded end 55 and a large diameter portion 57. The large diameter portion 57 is threaded externally adjacent a connection end 58 thereof. A peripheral face 59 of the housing is adapted to be aligned with the end face of the terminated optical fiber portion after a connection has been made.

Extending into an end portion 61 of the connector is the cable which includes the optical fiber, the end portion of which is terminated by the connector 20. Facilities known in the art such as those depicted in previously mentioned U.S. patent 4,863,235 may be used to terminate portions of a sheath system of the cable.

Another desired property of an optical fiber connector is the avoidance of forces applied to the optical connection between the connectors. In at least one optical fiber cable of the prior art which is to be terminated with a plug, a core comprising at least one optical fiber is enclosed in a jacket, non-metallic filamentary strength members such as polymeric yarn, for example, and an outer jacket. It becomes important to prevent the transmittal of tensile forces to optical fibers at their terminations with the plugs. If this is not done, the fibers may be broken or microbending losses in the fiber may occur and degrade the quality of the transmission. Also, any forces which are not diverted to other portions of the connector may be imparted to a plug thereby disturbing its optical mating and its critical alignment with the other plug.

In order to avoid such losses at a connection, provisions must be made for avoiding the application of forces to the optical fibers after portions of a sheath system of the cable have been removed for termination. Instead, any pulling forces must be transferred to the connector housing. When a connection is to be made, the strength members must be coupled to a housing portion of the connector so that forces are transferred to the housing before the forces reach the optical fiber terminations.

Available in the prior art is a hermaphroditic, dual biconic optical fiber connector which is effective to terminate an optical fiber cable which includes at least two optical fibers and a non-metallic, filamentary strength system. Included in the connector are a housing having a longitudinal axis and a force transfer system disposed adjacent to a cable entrance end of the housing and through which the optical fiber extends. See previously mentioned U.S. patent No. 4,363,235.

The force transfer system of the Anderson, et al. patent is effective to clamp the non-metallic strength system of a cable to transfer forces from the cable to the housing. Also, the force-transfer system includes two conformable, substantially smooth conically shaped surfaces which are held in mating relationship with each other with portions of the strength member system therebetween. Each surface diverges in a direction from the cable entrance end of the housing toward another end such that an included angle between diametrically opposed lines on each of the surfaces which are disposed in a plane passing through the axis of revolution of each surface does not exceed a predetermined value.

In use, after a craftsperson exposes an end portion of the optical fiber and secures those portions of the sheath system which have been opened to expose the optical fiber, the craftsperson causes the optical fiber to be received in the passageway 27 of the plug 22.

The cable extends rearwardly and through an opening 65 which is provided in an end portion 66 of an end cap 67. Opposite to the end portion 66 is an internally threaded portion 68 which is adapted to be turned onto the externally threaded portion of the housing 49. Also as can be seen in FIG.2, the end portion 66 of the end cap 67 is provided with a shoulder 69.

About each connector 20 is provided a cover 70. The cover 70 which is tubular in shape includes an end portion 72 having an inwardly turned lip 74. An opposite end portion 78 of the cover 70 is threaded internally. The connector 20 may be shipped with the cover 70 disposed sufficiently close to the frusto-conical portion 28 of the plug 22 so that the internally threaded portion 78 is turned threadably onto the externally threaded portion of the associated housing 49.

As should be apparent from the drawings, the leading end face of the frusto-conical portion of the plug 22 of a connector extends beyond a peripheral end face 59 of the associated housing. Also, inner ends of the recesses of the hermaphroditic portion of the connector which are aligned with the end face of its associated frusto-conical end portion of the plug extend outwardly slightly beyond that same peripheral face 59. This position of the plug 22 with respect to its housing 49 is maintained prior to connection by a compression spring 80 which is disposed concentrically about the cylindrical portion 23 of the plug 22 between the retaining rings 42 and 44.

When it is desired to carry out an optical connection between two of the connectors 20-20, a craftsperson turns the cover 70 of one of the connectors in a direction so as to be able to move the cover towards the shoulder 69 of the associated end cap (see right side of FIG. 2). After the internally threaded portion of the cover has been disengaged from the externally threaded portion of the associated housing, the cover is moved to engage the inwardly turned lip 74 of the cover with the shoulder 69. Then the craftsperson turns the cover 70 of the other connector 20 in a direction so as to move the lip 74 of the cover in a direction away from the shoulder 69 of the associated end cap. As the motion continues, the internally threaded portion of the cover 70 of the other cover 70 is engaged with the externally threaded portion of the associated housing of the one connector.

Afterwards the craftsperson moves the hermaphroditic portion of the one connector toward the hermaphroditic portion of the other connector white causing relative rotary motion between the two connectors. The relative rotary motion is continued until the fingers of each hermaphroditic portion are aligned with the recesses of the hermaphroditic portion of the other whence the recesses of the hermaphroditic portion of the one connector are aligned with the fingers of the hermaphroditic portion of the other connector.

The craftsperson causes further axial motion between the two connectors while maintaining the just- described orientation until the fingers of each bottom out in the recesses of the other. At that time, the end faces of the two fibers are in a predetermined relationship to each other to carry out a desired optical connection.

To secure the connection, the craftsperson moves axially the cover of the other connector and turns the cover to cause its internally threaded portion to be turned threadably onto the externally threaded portion of the housing of the one connector. Such rotary motion is discontinued when the lip 74 of the cover 70 of the other connector abuts a peripheral face 82 of the large diameter portion of its associated housing (see left hand side of FIG. 2).

Advantageously, no separate sleeve is required to carry out the connection. Instead, each biconic plug has been provided with a hermaphroditic portion which facilitates connection with another identical connector.

It should be apparent that one use of the single optical fiber hermaphroditic connection of this invention is in a bulkhead connector. In such a use, a coupling nut 70 becomes unnecessary for a housing 49 which is to be mounted within a bulkhead (not shown) such that the threaded portion of the large diameter portion 57 of the housing extends through the bulkhead. Means (not shown) may be turned over the threaded portion of the large diameter portion and over the small diameter portion of the housing to secure the housing within the bulkhead. Then a connector 20 is moved to mate its hermaphroditic portion 35 with the hermaphroditic portion which extends from the bulkhead and to cause its coupling nut to be turned onto the threaded portion of the large diameter portion of the housing which is secured in the bulkhead. This secures the connector20 to the housing 49 which is mounted in the bulkhead.

## Claims

1. A single optical fiber hermaphroditic connector, said connector comprising plug means having a passageway therethrough for receiving an end portion of an optical fiber to terminate the optical fiber, and supporting means for holding said plug means, said connector being characterized by
a hermaphroditic portion including a plurality of circumferentially spaced fingers which extend longitudinally beyond a free end of said plug means and being adapted to have fingers of an identical single optical fiber hermaphroditic connector become disposed in alternating circumferential relationship therewith; and
securing means disposed about said plug means and said supporting means for holding another identical single optical fiber hermaphroditic connector in juxtaposition with said single optical fiber hermaphroditic connector such that when the fingers extending from the supporting means of the other connector become interposed circumferentially between fingers of said single optical fiber hermaphroditic connector, said securing means hold the hermaphroditic connectors together such that the end faces of the plug means thereof are disposed to cause the optical fibers terminated by the plug means to be in optical connective relationship.

2. A single optical fiber hermaphroditic connector, said connector comprising plug means having a passageway therethrough for receiving an end portion of an optical fiber to terminate the optical fiber, and first means for holding said plug means, said connector being characterized by
bifurcated means including furcations extending past a free end of said plug means and being adapted to have furcations of bifurcated means of an identical single-fiber hermaphroditic connector become disposed in alternating circumferential relationship therewith; and
securing means disposed about said plug means for holding a second single optical fiber hermaphroditic connector in juxtaposition with said single optical fiber hermaphroditic connector such that when the furcations of the bifurcated means of the second hermaphroditic connector become interposed circumferentially between furcations of said single optical fiber hermaphroditic connector said securing means hold the hermaphroditic connectors together such that the end faces of the plug means thereof are disposed to cause the optical fibers terminated by the plug means to be in optical connective relationship.

3. The connector of claim 2, wherein said plug means extends outwardly for only a portion of the length of said furcations.

4. The connector of claim 3, wherein said connector includes a cable entrance end and a connection end and wherein said connector includes means for causing said plug means to be biased outwardly of said housing means in a direction toward said connection end.

5. A single optical fiber hermaphroditic biconic connector, which comprises a plug which includes a cylindrical portion, an end portion and an opposite frusto-conical portion which is disposed at a connection end of said cylindrical portion, said plug including a passageway therethrough for receiving an end portion of an optical fiber, a housing in which said plug is mounted, and a hermaphroditic portion which is disposed about said frusto-conical end portion and which includes circumferentially alternating projecting fingers and recesses, said connector being characterized by
means for securing together the housing of one connector to another said connector after a hermaphroditic portion of the other connector has been mated with said connector such that projecting fingers of each connector are received in aligned recesses of the other connector to hold together said frusto-conical end portions with optical fiber end faces terminated therein in optical connection with each other.

6. The connector of claim 5, wherein said hermaphroditic portion includes a frusto-conical cavity with a small diameter portion being oriented toward free ends of said fingers, said frusto-conical cavity adapted to receive said frusto-conical portion of said plug.

7. The connector of claim 6, wherein said housing includes an externally threaded portion adjacent a connection end of said housing and wherein said means for securing together said housing to the housing of another said connector includes a cover which is disposed concentrically about said housing and which includes an internally threaded end portion which is adapted to be turned threadably onto the externally threaded portion of the housing of another said connector.

8. An optical connection, said optical connection including a first cable which includes a single optical fiber and a second cable which includes a single optical fiber, first and second single optical fiber hermaphroditic connectors which terminate said first and second cables, respectively, and each of which includes, plug means having a passageway therethrough in which is disposed an end portion of an optical fiber of one of the cables to terminate the optical fiber, and supporting means for holding said plug means, said connector being characterized by
a plurality of circumferentially spaced fingers which extend longitudinally beyond a free end of said plug means and having fingers of the other identical single optical fiber hermaphroditic connector disposed in alternating circumferential relationship therewith; and
securing means disposed about said plug means and said supporting means for holding the other single optical fiber hermaphroditic connector in juxtaposition therewith such that with the fingers extending from the supporting means of the other connector interposed circumferentially between fingers thereof, said securing means of one connector holds the hermaphroditic connectors together such that the end faces of the plug means thereof are disposed to cause the optical fibers terminated by the plug means to be in optical connective relationship.

9. The optical connection of claim 8, wherein each said connection includes means for causing plug means associated therewith to be biased into engagement with the plug means of the other connector.

10. A single optical fiber hermaphroditic connector, said connector comprising plug means having a passageway therethrough for receiving an end portion of an optical fiber to terminate the optical fiber, and supporting means for holding said plug means said connector being characterized by
a hermaphroditic portion including a plurality of circumferentially spaced, fingers which extend longitudinally beyond a free end of said plug means and being adapted to have fingers of another single optical fiber hermaphroditic connector become disposed in alternating circumferential relationship therewith;
said supporting means for holding said plug means including means which cooperate with another single optical fiber hermaphroditic connector in juxtaposition with said single optical fiber hermaphroditic connector such that when the fingers extending from the supporting means of the other connector become interposed circumferentially between fingers of said single optical fiber hermaphroditic connector, the hermaphroditic connectors may be secured together such that the end faces of the plug means thereof are disposed to cause the optical fibers terminated by the plug means to be in optical connective relationship.
